# EUROPEAN PATENT SPECIFICATION

(11) **EP 2 505 567 B1**
(45) Date of publication and mention of the grant of the patent: **25.07.2018**
(21) Application number: 12162341.7
(22) Date of filing: 30.03.2012
(51) Int. Cl.: C03B 37/05

(54) **Method for guiding gas flow in manufacture of mineral fibres and fiberising apparatus**
VERFAHREN ZUR HERSTELLUNG VON MINERALWOLLE UND FASERBILDUNGSVORRICHTUNG
PROCEDE POUR LA FABRICATION DE LAINE MINERALE ET APPAREIL DE DEFIBRAGE

(30) Priority: 01.04.2011 FI 20115314
(43) Date of publication of application: 03.10.2012
(73) Proprietor: Paroc Group Oy, 00181 Helsinki (FI)
(72) Inventor: Lindgren, Tommy, 20540 Turku (FI); Åstrand, Erik, 21600 Parainen (FI); Walli, Bjarne, 21600 Parainen (FI); Talonen, Markku, 21600 Parainen (FI); Lundström, Kim, 21600 Pargas (FI)
(74) Representative: Berggren Oy, Turku

(56) References cited:
- EP-B1- 0 354 913
- EP-B1- 0 567 480
- DE-B3-102008 035 129
- GB-A- 1 559 117
- JP-A- S63 235 512

## Description

The invention relates to an arrangement and a method for guiding a gas flow in the manufacture of mineral fibres and a fiberising apparatus according to the preambles of the independent claims presented further below.

Mineral wool is manufactured by melting suitable mineral-rich raw materials, such as diabase, limestone or slag in a melting furnace. The obtained melt is led to a fiberising apparatus, where it is formed into mineral fibres. A cascade-type fiberiser may typically be used as a fiberising apparatus, the cascade-type fiberiser typically comprising four fiberising rotors rotating around a horizontal or nearly horizontal axis. The axes of the fiberising rotors are typically arranged on different heights. Melt is fed to the mantle surface of the first fiberising rotor, where a part of it adheres. The rest of the melt is thrown from the first mantle surface to the mantle surface of the second fiberising rotor. Again a part of the melt gets a hold of the mantle surface of the second rotor and the rest of the melt is thrown to the mantle surface of the third rotor. A part of the melt again adheres to the third mantle surface and the rest is thrown to the fourth mantle surface, of which preferably the entire remaining melt mass gets a hold. The melt, which has got a hold of each rotor's mantle surface, is by means of centrifugal force formed into fibres, which detach from melt rings on the fiberising rotors.

The detachment of the fibres, their trajectory after detachment and also their qualitative properties may be assisted by arranging air blows around the fiberising rotors, the force and the direction of which air blows may be used to influence the properties of the fibres. The fibres are directed from the fiberising apparatus to a collecting member, for example to an inclined conveyor or a rotating drum, arranged in front of the fiberising apparatus in the second end of the collecting chamber. Generally, binder is also added to the fibres prior to their collection, by means of which binder individual fibres are made to attach better to the fibre web obtained later in the process. A continuous primary mineral fibre web, i.e. a primary fibre web, is thus formed on the collecting member, which web is transferred with the aid of conveyors from the collecting member to be processed further.

Typically the air blows around the fiberising rotors are formed by using several individual blow nozzles, which are arranged in the form of a blow nozzle ring around the active mantle surfaces of the fiberising rotors, or using blow slots, which encircle the active mantle surfaces of the fiberising rotors. These blow slots are, if needed, divided into several separate blow openings by means of fixed welded partition walls. The individual blow nozzles of the nozzle ring or the partition walls of the blow slot may be arranged at an angle in relation to the axis of the fiberising rotor. Thus a directed gas flow is provided over the mantle surface of the fiberising rotor, which promotes formation of fibres and their passage to the collecting member in a controlled and desired manner.

It has been noticed that when fiberising parameters, such as for example the composition of the mineral melt or the rotating speed of the fiberising rotor, changes, it is necessary to alter the direction of the gas blow over the mantle surface of the fiberising rotor in accordance with the new parameter value. It would be preferable to alter the direction of the blow during the fiberising event, for example when the amount of produced fibres changes. With solutions in use nowadays, alteration of the blow direction is however extremely difficult and time-consuming. When it is desired to alter the direction of the blow, the production of mineral fibres must be interrupted, and the fiberising apparatus must be structurally modified so that the blow nozzles of the nozzle rings or the partition walls of the blow slots encircling the fiberising rotors are attached in a new position. In practice the direction of the blow around the fiberising rotors is altered only rarely, and the problems caused by a change in the fiberising parameters are aimed to be solved in other ways. Difficulties and costs related to alteration of the blow direction also hinder the development of new products and/or fiberising parameters.

EP 0354913 discloses a fibrillation device where the opposed walls of the air gap are inclined radially outwardly with the respect of the axis of the rotation, thereby transforming the air stream into a conically shaped curtain around the spinning wheel.

GB 1559117 discloses an apparatus and method for manufacture of mineral wool, where the air flow supplied around each rotor has a forward component of velocity parallel with the axis of the rotor and tangential component of velocity in the direction of rotation of the rotor.

EP 0567 480 discloses an apparatus for formation of mineral wool, where the air supply slot means has an internal diameter substantially the same as the periphery of the associated rotor, and the air slot means are constructed to discharge an air blast substantially parallel to the rotor periphery.

JP 63-235512 discloses an apparatus for producing inorganic fibres, where air stream distribution is optimised by providing a plenum air discharging device comprising a plurality of pips arranged from the air plenum duct to the vicinity of the rotating fiberising rotor.

DE 102008035129 discloses a device and process for producing mineral fibres where the active fiberising rotors are provided with air nozzles, which can be individually controlled remotely.

One object of the present invention is to reduce or even completely eliminate the above-mentioned problems appearing in the prior art.

One object of the present invention is to provide an arrangement, a fiberising apparatus and a method, by means of which the control and optimisation of the gas blows adjacent to the mantle surfaces of the fiberising rotors of the fiberising apparatus may be significantly improved.

Another object of the present invention is to provide an arrangement and a method, by means of which alteration of the direction of the gas blows around the fiberising rotors of the fiberising apparatus is as easy and simple as possible.

The above-mentioned disadvantages are eliminated or reduced, and the above-mentioned objects are attained with the present invention, which is characterised by what is defined in the characterising parts of the independent claims presented hereafter.

Some preferred embodiments according to the invention are disclosed in the dependent claims presented hereafter.

A typical arrangement according to the invention for guiding a gas flow in the manufacture of mineral fibres comprises
- a first support ring, and at least one second support ring, which support rings are placed at a distance from each other around a common imaginary axis,
- at least one, preferably several, wing member, which is attached at its first attaching point to the first support ring and at its second attaching point to the second support ring, and between which first and second attaching point a flexible joint point is arranged,
- means for moving the first or second support ring around the common axis.

A typical fiberising apparatus according to the invention for forming mineral wool fibres comprises
- at least one, preferably several, fiberising rotor rotating around a horizontal or nearly horizontal axis, and
- blow members, which are arranged to surround an active mantle surface of the fiberising rotor of the fiberising apparatus and which are arranged to produce a gas flow for blowing the formed fibres from the mantle surfaces, whereby
in connection with at least one fiberising rotor has been arranged an arrangement according to the invention, so that the axis of the fiberising rotor and the imaginary axis of the support rings of the arrangement are congruent.

A typical method according to the invention for guiding a gas flow in the manufacture of mineral fibres is disclosed in claim 10 and comprises
- forming mineral fibres by leading mineral melt onto the outer surface of a fiberising rotor rotating around a horizontal axis,
- blowing the formed fibres away from the fiberising rotor with a gas flow, which is led adjacent to the active mantle surface of the fiberising rotor,
- guiding the direction of the gas flow with the aid of the wing members of the fiberising rotor, which wing members are arranged at an angle in relation to the axis of the fiberising rotor,
- arranging the first end of the wing member in a fixed manner to the first support ring and the second end to the second support ring, which support rings are arranged to encircle the fiberising rotor, and
- altering the angle of the wing member by moving the first or second support ring around the fiberising rotor.

Now is has surprisingly been found out that by arranging a first and second support ring around the fiberising rotor, either one of which support rings is movable, and by attaching at least one wing member to them, which wing member has a flexible joint point, an arrangement is provided, by means of which the direction of the wing member(s) may easily be altered, even during a fiberising event. The direction of the wing member(s) may simply be altered by moving the first or second support ring around the imaginary central axis of the support ring, whereby the wing member end, which is attached to the moving support ring, is transferred together with the support ring. The other end of the wing member remains in its place, whereby the angle of the wing member changes in the distance between the flexible joint point and the moved end. This makes possible the alteration of the angle of the wing member in a stepless manner. Simultaneously the fiberising event itself and changes occurring during it may be controlled even better than before. The invention also provides a possibility for effortlessly testing the effect of different blow angles on the fiberising result, which makes the development of new products easier.

According to one embodiment of the invention the angle of the wing member(s) may be altered during the fiberising event, whereby possible changes occurring during the fiberising event may be reacted to quickly. The fiberising device is thus not displaced from its own place for the duration of the alteration of the angle of the wing member. It is also possible that the feeding of mineral melt is continued as normal during the alteration of the wing angle.

The arrangement according to the invention comprises a first support ring and a second support ring, which are arranged at a distance from each other. The support rings generally have the same diameter, and their centre points are arranged on the same imaginary axis. The support rings are typically manufactured from metal, such as hard steel. The distance between the first and second support ring is typically 2-100 mm, preferably 3-20 mm.

It is not essential for the invention whether the first or second support ring is arranged to move around the imaginary axis. The support ring is arranged to move so that the distance between the support rings remains substantially the same before the movement, during the movement and after the movement. In one preferred embodiment of the invention the second support ring, which is arranged in the fiberising apparatus closer to the collecting chamber and collecting member, is arranged to be movable. The wing members are attached at their first end to the stationary support ring and at their second end to the moving support ring. The fixed, stationary support ring may be attached with suitable attaching members to the casing of the fiberising rotor of the fiberising device.

In one typical embodiment of the invention the wing member is manufactured from a metal, such as common hard steel. The wing member is attached at its first attaching point to the first support ring and at its second attaching point to the second support ring. The total length of the wing member is typically slightly longer than the distance between the first and second attaching point. This means that the wing member may extend slightly over the first and second support ring.

Typically the total length of the wing member from its first end to its second end is 40-80 mm. If several wing members are arranged adjacently, they may be considered to form a wing member group. The wing member group typically comprises 5-15 wings. The distance between the wing members within the wing member group is typically constant, and varies between 5-20 mm, but if the arrangement comprises several wing member groups, the distance between the wing members in two adjacent wing member groups may differ from each other.

A flexible joint point is arranged between the first and second attaching point of the wing member. The joint point may be achieved with a mechanical hinge member or another corresponding solution, or the joint point may comprise flexible material, which enables a controlled change of the angle of the wing member in the distance between the joint point and the attaching point attached to the moving support ring. In one preferred embodiment of the invention the flexible joint point arranged between the first and second attaching point of the wing member is manufactured from spring steel. If the joint point is manufactured from a flexible material, its width in the longitudinal direction of the wing member is 5-30 mm, and its height is the same as the height of the wing member.

In one embodiment of the invention the arrangement comprises several adjacent second support rings, whereby at least one, preferably several wing member is attached at its second end to each of the second support rings. In one especially preferred embodiment the arrangement comprises two, three, four or five second support rings, whereby at least one, preferably several wing member is attached at its second end to each of the second support rings. Thus the arrangement has a stationary first support ring, to which all the wing members of the arrangement are attached at their first attaching points. The first wing member group, which comprises one, preferably several adjacent, wing member, is attached at its second attaching point to the second support ring, which is arranged at a distance from the first support ring. The second wing member group, which comprises one, preferably several adjacent, wing member, is attached at its second attaching point to a third support ring, which is arranged at a distance from the first support ring contiguous to the second support ring. The arrangement may comprise also a third and a fourth wing member group, which comprise one, preferably several adjacent, wing member. Both of the wing members of the third and fourth wing member group are attached at their second attaching point to their "own" fourth or fifth support ring, which support rings are arranged contiguous to each other at a distance from the first support ring and contiguous to the second support ring. The second, third, fourth and fifth support ring may be moved around the common imaginary axis of the support rings independently from each other. In this way the arrangement may comprise four wing member groups, the angles of the wing members of which are adjustable independently from each other. The active mantle surface of the fiberising rotor of the fiberising apparatus may in this way be divided into sections, preferably four sections, the angles of the wing members of each of which sections may be altered independently, and thus the blows of each section may be controlled and optimised in the best possible way.

Typically the wing members are arranged at an angle of 0°-45°, preferably 5°-30° in relation to the imaginary axis during a fiberising event. A typical alteration achieved in the angle of the wing member during a fiberising event is ±10°, more preferably ±5° in relation to the starting situation, i.e. the angle of the wings is arranged to change by ±10°, more preferably ±5°.

The arrangement's means for moving the first, second or optional subsequent support rings preferably comprise a pin member, which is attached at its first end to said support ring. In case there are several adjacent second support rings, each second support ring may comprise its own pin member. Alternatively the adjacent second support rings may have been connected to each other so that all the support rings are moved by means of one pin member. The connection of adjacent support rings may be realised so that by moving the pin member, all the support rings move similarly, whereby the alteration of the angle of the wing members attached to each moving support ring is the same. The connection of the adjacent support rings may also be realised in a geared manner, whereby the movement of the first second support ring is transmitted to the second support ring as larger or smaller, whereby one pin member may be used to provide a different alteration of the angle for different wing member groups. The pin member is usually 5-50 mm, more preferably 10-40 mm long.

According to one embodiment of the invention the angle of the wing member may be altered manually. According to another embodiment of the invention the second end of the pin member is arranged in functional connection with a power source, such as an electric motor, for moving the first or second support ring.

Preferably in the method according to the invention mineral melt is fed to the mantle surface of the first rotor of the fiberising apparatus, wherefrom the mineral melt is thrown to the mantle surface of the second rotor, and thence onwards to the mantle surface of a possible subsequent rotor, whereby mineral fibres are formed on the active mantle surfaces of the rotors. The fiberising apparatus generally comprises at least two, typically three or more, most typically four, fiberising rotors rotating around a horizontal or nearly horizontal axis. The mineral fibres formed on the fiberising rotors are blown off the active mantle surfaces of the rotors of the fiberising apparatus. Typically the arrangement according to the invention is thus arranged to encircle at least one of the active mantle surfaces of the rotors of the fiberising apparatus and it is arranged in the immediate vicinity of the active mantle surface. An active mantle surface here means that part of the surface of the fiberising rotor, where mineral fibres are formed from the melt. The arrangement according to the invention is preferably arranged in connection with each fiberising rotor of the fiberising apparatus, especially preferably at least in connection with the second, third and/or fourth fiberising rotor.

Typically the formed mineral fibres are blown from the fiberising rotors of the fiberising apparatus toward the collecting member. According to one embodiment of the invention the fiberising apparatus thus comprises a collecting member, which is arranged at a distance from the fiberising apparatus, and monitoring means for monitoring a fibre web formed by fibres collected on the collecting member. The collecting member placed in front of the fiberising apparatus may be a conventional conveyor or it may comprise a first and a second collecting surface, which are preferably arranged on top of each other in the vertical direction. The collecting member may comprise for example two rotating cylinders arranged on top of each other, the surface of which may be arranged to be air permeable, for example with perforations or slits. Suction means may be arranged inside the cylinders for suctioning air and possible other gases from the collecting chamber. At the same time the fibres are collected with the aid of suction to the surface of the collecting members. The cylinders may rotate in the same direction or against each other. Double collecting intensifies the collection of mineral fibres, which is preferred especially when using a fiberising apparatus having a high fibre production capacity. When using two collecting members the collecting capacity may be increased to such an extent that the weights of the collected primary webs remain below defined limit values without increase in the speed of the collecting members.

The collected fibre web and its properties may be monitored with monitoring means. The monitoring means may comprise imaging means, for example a camera, which may be functionally connected with an image recognition unit. With the aid of the image recognition unit or image recognition system the properties of the formed fibre web, for example a change in its thickness, may automatically be monitored. In case thinner and/or thicker parts occurring in the fibre web are observed by the monitoring means, it is possible to change the distribution of the mineral fibres on the collecting member by altering the direction of a blow encircling one or more fiberising rotors. The monitoring members may comprise also a weighing conveyor, with the aid of which the weight of the formed web is monitored. The properties of the fibre web may be measured at predetermined time intervals or continuously. The fibre web may simultaneously be monitored optically and by following its weight. In one embodiment of the invention the formed mineral fibres are thus collected to a fibre web, at least one property of which, such as the weight or thickness, is monitored with monitoring members, and the angle of the wing members is altered based on at least one property of the collected fibre web.

According to one embodiment of the invention the fiberising apparatus comprises analysing means for analysing data obtained from the monitoring means and/or means for altering the angle of the wing member based on a result obtained from the monitoring or analysing means. This embodiment of the invention thus enables the automatic alteration of the angle of the wing members based on the data obtained from the monitoring or analysing means. The arrangement may also comprise a memory unit for storing measuring values collected with the monitoring members.

Binder is typically fed to the formed fibres with binder members, which are arranged around the fiberising rotor of the fiberising apparatus, in the immediate vicinity thereof. The binder members may be arranged very close to the blow members, even in contact with the blow members. The binder members generally form a ring of binder members on the outside of the blow members, i.e. on the side which is away from the fiberising rotors, the distance of which ring from the blow members is 0-10 cm, typically 1-7 cm, more typically 2-5 cm. In one embodiment of the invention the binder members may be arranged in the centre of the fiberising rotors, on the side of them which is towards the collecting chamber. Binder may also be added both from the binder members surrounding the mantle surfaces of the fiberising rotors and from the centre of the fiberising rotors.

In the following, the invention will be described in more detail with reference to the appended figures, in which
- Figure 1: shows an arrangement according to one embodiment of the invention seen from the front,
- Figure 2: shows an arrangement according to one embodiment of the invention seen from the side, and
- Figure 3: shows an arrangement according to one embodiment of the invention as a perspective view.

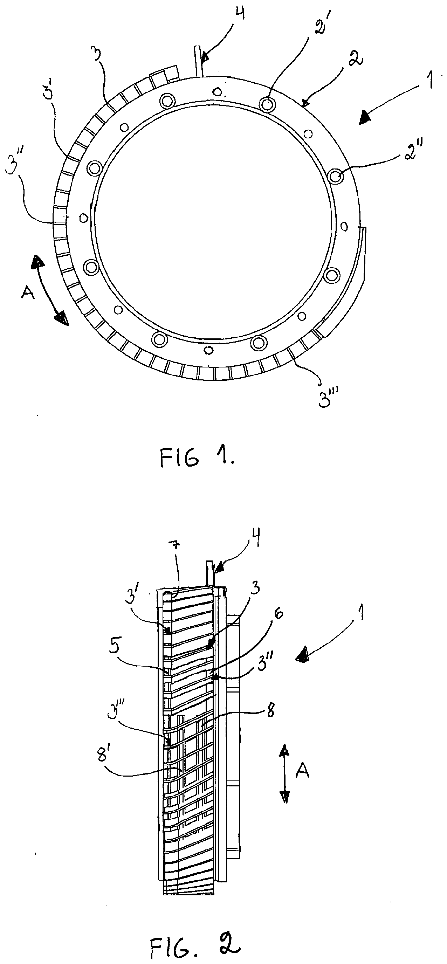

Figure 1 shows an arrangement according to one embodiment of the invention seen from the front. The arrangement 1 comprises a collar 2, by means of which it may be attached in connection with an individual fiberising rotor (not shown). The collar is provided with a number of attachment openings 2', 2" for suitable attaching means. The blow wing arrangement 1 further comprises a number of wing members 3, 3', 3", 3"', which are arranged to encircle the active mantle surface of the fiberising rotor. Figure 1 also shows a guide pin member 4 for altering the position of the wing members 3, 3', 3", 3"'.

Figure 2 shows an arrangement according to one embodiment of the invention seen from the side. The arrangement 1 comprises a first support ring 5 and a second support ring 6, which are arranged at a distance from each other. The wing members 3, 3', 3", 3'" are attached at their first attaching points to the first support ring 5 and at their second attaching points to the second support ring 6. The first attaching point is situated close to the first end of the wing members and the second attaching point close to the second end of the wing members. A flexible joint point 7 is arranged in the wing members 3, 3', 3", 3'" between the first and second attaching point. The guide pin member 4 is arranged in fixed connection with the second support ring 6, which is arranged to move in the directions shown with arrow A. When the second support ring 6 is moved with the aid of the guide pin member, the angle of the wing members 3, 3', 3", 3'" changes in the distance between the flexible joint point 7 and the second support ring 6 in relation to the imaginary central axis passing through the support ring. Figure 2 also shows additional rings 8, 8'. If the arrangement 1 in addition to moving wing members 3, 3', 3", 3'" also comprises stationary wing members, they may be attached in a fixed manner to the additional rings 8, 8', which are unmoving.

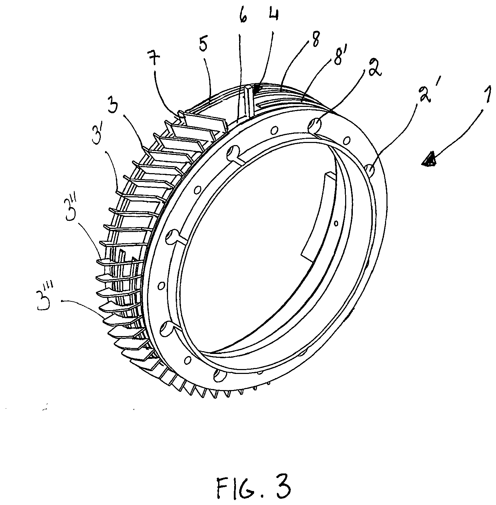

Figure 3 shows an arrangement according to one embodiment of the invention as a perspective view. The parts of Figure 3 to their numbering correspond to the parts of Figures 1 and 2, i.e. the same reference number is used for corresponding parts.

## Claims

1. Fiberising apparatus for forming mineral wool fibres, which fiberising apparatus comprises
- at least one, preferably several, fiberising rotor rotating around a horizontal or nearly horizontal axis, and
- blow members, which are arranged to encircle an active mantle surface of the fiberising rotor of the fiberising apparatus and which are arranged to produce a gas flow for blowing the formed fibres from the mantle surfaces,
**characterised in that**
wherein in connection with at least one fiberising rotor is arranged an arrangement for guiding a gas flow in the manufacture of mineral fibres, which arrangement comprises
- a first support ring (5), and at least one second support ring (6), which support rings are placed at a distance from each other around a common imaginary axis,
- at least one, preferably several, wing member (3, 3', 3", 3"'), which is attached at its first attaching point to the first support ring (5) and at its second attaching point to the second support ring (6),
- the wing member (3, 3', 3", 3"') has a flexible joint point (7), which is arranged between the first and second attaching point,
- means for moving the first or second support ring (5, 6) around the common axis, so that the axis of the fiberising rotor and the imaginary axis of the support rings of the arrangement are congruent.

2. Fiberising apparatus according to claim 1, **characterised in that** the arrangement for guiding the gas flow comprises several adjacent second support rings, whereby at least one, preferably several wing member (3, 3', 3", 3"') is attached at its second end to each of the second support rings.

3. Fiberising apparatus according to claim 1 or 2, **characterised in that** the flexible joint point (7) arranged between the first and second attaching point of the wing member (3, 3', 3", 3"') is manufactured from spring steel.

4. Fiberising apparatus according to any of the claims 1-3, **characterised in that** the distance between the first and second support ring (5, 6) is 2-100 mm, preferably 3-20 mm.

5. Fiberising apparatus according to any of the preceding claims 1-4, **characterised in that** the means for moving the first or second support ring (5, 6) comprise a pin member (4), which at its first end is attached to said support ring (5, 6).

6. Fiberising apparatus according to claim 5, **characterised in that** second end of the pin member (4) is arranged in functional connection with a power source, such as an electric motor, for moving the first or second support ring (5, 6).

7. Fiberising apparatus according to any of the preceding claims 1-6, **characterised in that** the angle of the wing member (3, 3', 3", 3"') is arranged to be altered by ±10°, more preferably ±5°.

8. Fiberising apparatus according to claim 1, **characterised in that** it comprises a collecting member, which is arranged at a distance from the fiberising apparatus, and monitoring means for monitoring a fibre web formed by fibres collected on the collecting member.

9. Fiberising apparatus according to claim 8, **characterised in that** the fiberising apparatus comprises analysing means for analysing data obtained from the monitoring means and/or means for altering the angle of the wing member (3, 3', 3", 3"') based on the result obtained from the monitoring or analysing means.

10. Method for guiding a gas flow in the manufacture of mineral fibres, comprising
- forming mineral fibres by leading mineral melt onto the outer surface of a fiberising rotor rotating around a horizontal axis,
- blowing the formed fibres away from the fiberising rotor with a gas flow, which is led adjacent to the active mantle surface of the fiberising rotor,
- guiding the direction of the gas flow with the aid of the wing members (3, 3', 3", 3"') of the fiberising rotor, which wing members (3, 3', 3", 3"') are arranged at an angle in relation to the axis of the fiberising rotor,
**characterised in**
- arranging the first end of the wing member (3, 3', 3", 3"') in a fixed manner to the first support ring (5) at a first attaching point and the second end to the second support (6) ring at a second attaching point, which support rings (5, 6) are arranged to encircle the fiberising rotor, the wing member (3, 3', 3", 3"') having a flexible joint point (7), which is arranged between the first and second attaching point,
- altering the angle of the wing member (3, 3', 3", 3"') by moving the first or second support ring (5, 6) around the fiberising rotor.

11. Method according to claim 10, **characterised in that** the angle of the wing member (3, 3', 3", 3"') is altered during the fiberising event.

12. Method according to claim 10 or 11, **characterised in that** the angle of the wing member (3, 3', 3", 3"') is altered manually.

13. Method according to any of the claims 10-12, **characterised in that** the formed mineral fibres are collected to a fibre web, at least one property of which is monitored with monitoring members, and the angle of the wing member (3, 3', 3", 3"') is altered based on at least one property of the fibre web.

14. Method according to any of the claims 10-13, **characterised in that** the angle of the wing member (3, 3', 3", 3"') is altered by ±10°, more preferably ±5°.

## Patentansprüche

1. Faserbildungsvorrichtung zum Ausbilden von Mineralwollefasern, wobei die Faserbildungsvorrichtung umfasst
- mindestens einen, vorzugsweise einige, Faserbildungsrotor, welcher sich um eine horizontale oder nahezu horizontale Achse dreht, und
- Blaselemente, welche ausgestaltet sind, eine aktive Mantelfläche des Faserbildungsrotors der Faserbildungsvorrichtung zu umgeben und welche ausgestaltet sind, einen Gasfluss zum Blasen der ausgebildeten Fasern von den Mantelflächen zu erzeugen,
**dadurch gekennzeichnet, dass**
in Verbindung mit mindestens einem Faserbildungsrotor eine Anordnung zum Führen eines Gasflusses bei der Anfertigung von Mineralfasern angeordnet ist, wobei die Anordnung umfasst
- einen ersten Haltering (5) und mindestens einen zweiten Haltering (6), wobei die Halteringe in einem Abstand voneinander um eine gemeinsame imaginäre Achse angeordnet sind,
- mindestens ein, vorzugsweise einige, Flügelelement (3, 3', 3'', 3'''), welches an seinem ersten Anbringungspunkt an dem ersten Haltering (5) und an seinem zweiten Anbringungspunkt an dem zweiten Haltering (6) angebracht ist,
- wobei das Flügelelement (3, 3', 3'', 3''') einen elastischen Verbindungspunkt (7) aufweist, welcher zwischen dem ersten und zweiten Anbringungspunkt angeordnet ist,
- Mittel zum Bewegen des ersten oder zweiten Halterings (5, 6) um die gemeinsame Achse, sodass die Achse des Faserbildungsrotors und die imaginäre Achse der Halteringe der Anordnung kongruent sind.

2. Faserbildungsvorrichtung gemäß Anspruch 1, **dadurch gekennzeichnet, dass** die Anordnung zum Führen des Gasflusses einige benachbarte zweite Halteringe umfasste, wobei mindestens ein, vorzugsweise einige, Flügelelement (3, 3', 3'', 3''') an seinem zweiten Ende an jedem der zweiten Halteringe angebracht ist.

3. Faserbildungsvorrichtung gemäß Anspruch 1 oder 2, **dadurch gekennzeichnet, dass** der elastische Verbindungspunkt (7), welcher zwischen dem ersten und zweiten Anbringungspunkt des Flügelelements (3, 3', 3'', 3''') angeordnet ist, aus Federstahl gefertigt ist.

4. Faserbildungsvorrichtung gemäß einem der Ansprüche 1-3, **dadurch gekennzeichnet, dass** der Abstand zwischen dem ersten und zweiten Haltering (5, 6) 2-100 mm, vorzugsweise 3-20 mm, beträgt.

5. Faserbildungsvorrichtung gemäß einem der vorhergehenden Ansprüche 1-4, **dadurch gekennzeichnet, dass** die Mittel zum Bewegen des ersten oder zweiten Halterings (5, 6) ein Stiftelement (4) umfassen, welches an seinem ersten Ende an dem Haltering (5, 6) angebracht ist.

6. Faserbildungsvorrichtung gemäß Anspruch 5, **dadurch gekennzeichnet, dass** sich ein zweite Ende des Stiftselements (4) in funktionaler Verbindung mit einer Antriebsquelle, wie zum Beispiel einem elektrischen Motor, befindet, um den ersten oder zweiten Haltering (5, 6) zu bewegen.

7. Faserbildungsvorrichtung gemäß einem der vorhergehenden Ansprüche 1-6, **dadurch gekennzeichnet, dass** der Winkel des Flügelelements (3, 3', 3'', 3''') ausgestaltet ist, um ±10°, weiter vorzugsweise ±5°, geändert zu werden.

8. Faserbildungsvorrichtung gemäß Anspruch 1, **dadurch gekennzeichnet, dass** sie ein Sammelelement, welches in einem Abstand von der Faserbildungsvorrichtung angeordnet ist, und Überwachungsmittel zum Überwachen eines aus Fasern geformtes Fasergewebe, welches auf dem Sammelelement gesammelt wird, umfasst.

9. Faserbildungsvorrichtung gemäß Anspruch 8, **dadurch gekennzeichnet, dass** die Faserbildungsvorrichtung Analysemittel zum Analysieren von von den Überwachungsmitteln erhaltenen Daten und/oder Mittel zum Ändern des Winkels des Flügelelements (3, 3', 3'', 3''') basierend auf dem von den Überwachungs- oder Analysemitteln erhaltenen Ergebnis umfasst.

10. Verfahren zum Führen eines Gasflusses bei der Herstellung von Mineralfasern, umfassend
- Ausbilden von Mineralfasern durch Führen einer Mineralschmelze in die Außenfläche eines Faserbildungsrotors, welcher sich um eine horizontale Achse dreht,
- Blasen der ausgebildeten Fasern weg von dem Faserbildungsrotor mit einem Gasfluss, welcher benachbart zu der aktiven Mantelfläche des Faserbildungsrotors geführt wird,
- Führen der Richtung des Gasflusses mit der Hilfe von den Flügelelementen (3, 3', 3'', 3''') des Faserbildungsrotors, wobei die Flügelelemente (3, 3', 3'', 3"') in einem Winkel in Bezug auf die Achse des Faserbildungsrotors angeordnet sind, **gekennzeichnet durch**
- Anordnen des ersten Endes des Flügelelements (3, 3', 3'', 3''') in einer festen Art und Weise an dem ersten Haltering (5) an einem ersten Anbringungspunkt und des zweiten Endes an dem zweiten Haltering (6) an einem zweiten Anbringungspunkt, wobei die Halteringe (5, 6) angeordnet sind, den Faserbildungsrotor zu umgeben, wobei das Flügelelement (3, 3', 3'', 3"') einen elastischen Verbindungspunkt (7) aufweist, welcher zwischen dem ersten und zweiten Anbringungspunkt angeordnet ist,
- Ändern des Winkels des Flügelelements (3, 3', 3'', 3''') durch Bewegen des ersten oder zweiten Halterings (5, 6) um den Faserbildungsrotor.

11. Verfahren gemäß Anspruch 10, **dadurch gekennzeichnet, dass** der Winkel des Flügelelements (3, 3', 3'', 3'") während des Faserbildungsereignisses geändert wird.

12. Verfahren gemäß Anspruch 10 oder 11, **dadurch gekennzeichnet, dass** der Winkel des Flügelelements (3, 3', 3'', 3''') manuell geändert wird.

13. Verfahren gemäß einem der Ansprüche 10-12, **dadurch gekennzeichnet, dass** die gebildeten Mineralfasern zu einem Fasergewebe gesammelt werden, wobei mindestens eine Eigenschaft davon mit Überwachungsmitteln überwacht wird, und dass der Winkel des Flügelelements (3, 3', 3'', 3''') basierend auf zumindest einer Eigenschaft des Fasergewebes geändert wird.

14. Verfahren gemäß einem der Ansprüche 10-13, **dadurch gekennzeichnet, dass** der Winkel des Flügelelements (3, 3', 3'', 3''') um ±10°, weiter vorzugsweise ±5° geändert wird.

## Revendications

1. Appareil de fibrage pour former des fibres de laine minérale, lequel appareil de fibrage comprend
- au moins un, de préférence plusieurs, rotors de fibrage tournant autour d'un axe horizontal ou quasi horizontal, et
- des organes de soufflage, qui sont agencés pour encercler une surface de chemise extérieure active du rotor de fibrage de l'appareil de fibrage et qui sont agencés pour produire un écoulement de gaz pour souffler les fibres formées à partir des surfaces de chemise extérieure,
**caractérisé en ce que**
dans lequel en lien avec au moins un rotor de fibrage, un agencement est agencé pour guider un écoulement de gaz dans la fabrication de fibres minérales, lequel agencement comprend
- un premier anneau de support (5), et au moins un second anneau de support (6), lesquels anneaux de support sont placés à une distance l'un de l'autre autour d'un axe imaginaire commun,
- au moins un, de préférence plusieurs, organes d'ailette (3, 3', 3'', 3'''), qui sont fixés au niveau de leur premier point de fixation au premier anneau de support (5) et au niveau de leur second point de fixation au second anneau de support (6),
- l'organe d'ailette (3, 3', 3'', 3''') a un point d'articulation flexible (7), qui est agencé entre les premier et second points de fixation,
- des moyens de déplacement du premier ou du second anneau de support (5, 6) autour de l'axe commun, de sorte que l'axe du rotor de fibrage et l'axe imaginaire des anneaux de support de l'agencement soient congruents.

2. Appareil de fibrage selon la revendication 1, **caractérisé en ce que** l'agencement pour guider l'écoulement de gaz comprend plusieurs seconds anneaux de support adjacents, moyennant quoi au moins un, de préférence plusieurs organes d'ailette (3, 3', 3", 3''') sont fixés au niveau de leur seconde extrémité à chacun des seconds anneaux de support.

3. Appareil de fibrage selon la revendication 1 ou 2, **caractérisé en ce que** le point d'articulation flexible (7) agencé entre les premier et second points de fixation de l'organe d'ailette (3, 3', 3", 3''') est fabriqué à partir d'un acier à ressort.

4. Appareil de fibrage selon l'une quelconque des revendications 1 à 3, **caractérisé en ce que** la distance entre les premier et second anneaux de support (5, 6) est de 2 à 100 mm, de préférence de 3 à 20 mm.

5. Appareil de fibrage selon l'une quelconque des revendications 1 à 4 précédentes, **caractérisé en ce que** les moyens de déplacement du premier ou du second anneau de support (5, 6) comprennent un organe de broche (4), qui au niveau de sa première extrémité est fixé audit anneau de support (5, 6).

6. Appareil de fibrage selon la revendication 5, **caractérisé en ce que** la seconde extrémité de l'organe de broche (4) est agencée en raccordement fonctionnel avec une source d'alimentation, telle qu'un moteur électrique, pour déplacer le premier ou le second anneau de support (5, 6).

7. Appareil de fibrage selon l'une quelconque des revendications 1 à 6 précédentes, **caractérisé en ce que** l'angle de l'organe d'ailette (3, 3', 3'', 3''') est agencé pour être modifié de ± 10°, de manière davantage préférée de ± 5°.

8. Appareil de fibrage selon la revendication 1, **caractérisé en ce qu'**il comprend un organe de collecte, qui est agencé à une distance de l'appareil de fibrage, et des moyens de surveillance pour surveiller une bande de fibres formée de fibres collectées sur l'organe de collecte.

9. Appareil de fibrage selon la revendication 8, **caractérisé en ce que** l'appareil de fibrage comprend des moyens d'analyse pour analyser des données obtenues à partir des moyens de surveillance et/ou des moyens de modification de l'angle de l'organe d'ailette (3, 3', 3'', 3''') d'après le résultat obtenu des moyens de surveillance ou d'analyse.

10. Procédé de guidage d'un écoulement de gaz dans la fabrication de fibres minérales, comprenant
- la formation de fibres minérales en menant un bain fondu minéral sur la surface extérieure d'un rotor de fibrage tournant autour d'un axe horizontal,
- le soufflage des fibres formées à distance du rotor de fibrage avec un écoulement de gaz, qui est mené adjacent à la surface de chemise extérieure active du rotor de fibrage,
- le guidage de la direction de l'écoulement de gaz à l'aide des organes d'ailette (3, 3', 3", 3''') du rotor de fibrage, lesquels organes d'ailette (3, 3', 3", 3''') sont agencés en formant un angle par rapport à l'axe du rotor de fibrage,
**caractérisé par**
- l'agencement de la première extrémité de l'organe d'ailette (3, 3', 3", 3''') de manière fixe par rapport au premier anneau de support (5) au niveau d'un premier point de fixation et de la seconde extrémité au second anneau de support (6) au niveau d'un second point de fixation, lesquels anneaux de support (5, 6) sont agencés pour encercler le rotor de fibrage, l'organe d'ailette (3, 3', 3", 3''') ayant un point d'articulation flexible (7), qui est agencé entre les premier et second points de fixation,
- la modification de l'angle de l'organe d'ailette (3, 3', 3", 3''') en déplaçant le premier ou le second anneau de support (5, 6) autour du rotor de fibrage.

11. Procédé selon la revendication 10, **caractérisé en ce que** l'angle de l'organe d'ailette (3, 3', 3", 3" est modifié pendant l'évènement de fibrage.

12. Procédé selon la revendication 10 ou 11, **caractérisé en ce que** l'angle de l'organe d'ailette (3, 3', 3", 3''') est modifié manuellement.

13. Procédé selon l'une quelconque des revendications 10 à 12, **caractérisé en ce que** les fibres minérales formées sont collectées en une bande de fibres, dont au moins une propriété est surveillée avec des organes de surveillance, et l'angle de l'organe d'ailette (3, 3', 3'', 3''') est modifié d'après au moins une propriété de la bande de fibres.

14. Procédé selon l'une quelconque des revendications 10 à 13, **caractérisé en ce que** l'angle de l'organe d'ailette (3, 3', 3'', 3''') est modifié de ± 10°, de manière davantage préférée de ± 5°.
